# EUROPÄISCHE PATENTSCHRIFT

(11) **EP 0 335 127 B1**
(45) Veröffentlichungstag und Bekanntmachung des Hinweises auf die Patenterteilung: **19.10.1994**
(21) Anmeldenummer: 89103726.9
(22) Anmeldetag: 03.03.1989
(51) Int. Cl.: B32B 31/08

(54) **Einrichtung zum Herstellen von mehrlagigen Materialbahnen**
Apparatus for making multilayered materials
Dispositif de fabrication de bandes multicouches

(30) Priorität: 30.03.1988 DE 3810811
(43) Veröffentlichungstag der Anmeldung: 04.10.1989
(73) Patentinhaber: Continental Aktiengesellschaft, 30165 Hannover (DE)
(72) Erfinder: Klabunde, Karlheinz, D-3007 Gehrden 1 (DE); Körber, Werner, D-3222 Freden (DE); Specht, Hans, D-3410 Northeim (DE); Tegeler, Willi, D-3050 Wunstorf 1 (DE)

(56) Entgegenhaltungen:
- EP-A- 0 244 817
- CH-A- 598 942
- DE-B- 1 270 268
- US-A- 3 879 242
- PATENT ABSTRACTS OF JAPAN, Band 12, Nr. 305 (M-733)[3152], 19. August 1988; & JP-A-63 81 024

## Beschreibung

Die Erfindung betrifft zunächst ein Verfahren zur Herstellung mehrlagiger Materialbahnen, insbesondere Elastomere enthaltender oder aus Elastomeren bestehender Materialbahnen, bei dem ein Materialbahnabschnitt mehrmals durch eine Doubliereinheit geführt und dabei jedesmal mit einer weiteren Materialbahn vereinigt wird.

Bei der Herstellung von mit Kautschuk versehenen Gewebebahnen kann nicht jede gewünschte Bahndicke in einem Ar beitsgang hergestellt werden, da sonst beispielsweise Lufteinschlüsse entstehen oder keine ausreichende Gummierung des Gewebes erfolgen würde. Insbesondere bei mehrlagigen Gewebebahnen, wie sie bei der Herstellung von Fördergurten benötigt werden, werden deshalb mehrere einzelne Gewebelagen in mehreren Schichten übereinander gelegt und in Doubliereinheiten miteinander verbunden.

Aus der CH-PS 598 942 ist es dazu bekannt, mehrere Abwickelstationen, die jeweils eine einlagige Materialbahn bevorraten, hintereinander aufzureihen und die einzelnen Materialbahnen auf einem Gurtförderer zusammenzuführen und in einer Doubliereinheit miteinander zu verbinden. Eine derartige Einrichtung weist jedoch einen sehr großen Platzbedarf für die Vielzahl von Abwickelstationen auf und ist auch nur diskontinuierlich zu betreiben, da die einzelnen Trommeln in den Abwickelstationen nach ihrem Ablaufen durch neue, volle Trommeln ersetzt werden müssen.

Aus der US-A-3 879 242 ist eine Einrichtung zum Doublieren einer Karkasse auf ihrer Ober- und Unterseite bekannt. In einem ersten Arbeitsgang wird die Karkasse mit einer extrudierten Elastomerbahn in einer Doublierstation belegt und auf einer gegenüberliegenden Wickelvorrichtung aufgewickelt. Nach diesem Aufwickeln wird die Wickelvorrichtung in einer vertikalen Achse um 180° gedreht, so daß die aufgewickelte, einseitig doublierte Karkasse gewendet zurückgeführt werden kann. Durch dieses Wenden ist die unbeschichtete Seite der Karkasse nun oben. Diese einseitig beschichtete Karkasse wird entgegengesetzt zu der vorherigen Förderrichtung durch die Doublierstation geführt, der eine Elastomerbahn auf der anderen Seite des Doublierwalzenspaltes zugeführt wird. Die aus der Doublierstation austretende Karkasse ist nun beidseitig beschichtet bzw. doubliert und wird auf der ersten Wickelstation aufgewickelt. Die Doublierstation dieser bekannten Vorrichtung muß derart ausgebildet sein, daß sie für Doubliervorgänge in entgegengesetzten Richtungen benutzbar ist. Dieses erfordert eine aufwendige Höhen- und Umlenkeinrichtung der zugeführten, zu doublierenden Elastomerbahn, da diese Elastomerbahn je nach der Doublierrichtung in unterschiedlichen, entgegengesetzten Richtungen dem Doublierwalzenspalt zugeführt werden muß. Dazu ist ein separates, manuelles Einfädeln der elastomeren Materialbahn in die Doublierstation notwendig. Dieses hat einen erheblichen technischen Nachteil hinsichtlich einer angestrebten Automatisierung.

Aufgabe der vorliegenden Erfindung ist es, ein Verfahren zu schaffen, mit dem weitgehend kontinuierlich Materialbahnen doubliert werden können, sowie eine kompakte Vorrichtung zur Durchführung dieses Verfahrens.

Erfindungsgemäß wird diese Aufgabe dadurch gelöst, daß eine kontinuierlich zugeführte Materialbahn auf eine erste Wickelvorrichtung gewickelt, nach Abwicklung einer vorgegebenen Bahnlänge abgelängt oder abgeknickt und der abgelängte oder abgeknickte Materialbahnabschnitt dann mehrmals von der ersten Wickelvorrichtung auf eine zweite Wickelvorrichtung umgewickelt und wieder zurückgewickelt wird und dabei sowohl beim Hin- als auch beim Zurückwickeln mindestens eine zwischen den Wickelvorrichtungen angeordnete Doubliereinheit durchläuft, in der er bei jedem Umwickelvorgang mit einem entsprechenden weiteren Längenabschnitt der kontinuierlich zugeführten Materialbahn zusammengeführt und flächig verbunden wird.

Eine vorteilhafte Ausgestaltung der Erfindung wird im Kennzeichen des Anspruchs 2 offenbart.

In weiterer vorteilhafter Ausgestaltung des erfindungsgemäßen Verfahrens erfolgt die Doublierung auf einem Stahlförderband in jeweils planebenem Durchlauf durch die Doubliereinheiten.

Die Erfindung betrifft auch eine Einrichtung zur Durchführung des Verfahrens gemäß Anspruch 1 mit zwei Wickelvorrichtungen, auf die Abschnitte einer durch eine Zuführvorrichtung zugeführten Materialbahn aufwickelbar und in beiden Richtungen umwickelbar sind, und zwischen denen mindestens eine Doubliereinheit angeordnet ist, in deren Doublierspalt jeweils ein Abschnitt der von der Zuführvorrichtung kommenden Materialbahn mit den auf den Wickelvorrichtungen befindlichen Materialbahnabschnitten während jedes Umwickelvorganges in der jeweiligen Wickelrichtung zusammenführbar ist.

Diese Einrichtung, bekannt an sich aus der bereits erwähnten US-A-3 879 242, ist dadurch gekennzeichnet, daß zwischen den Wickelvorrichtungen eine jeweils in Wickelrichtung antreibbare, die Materialbahnabschnitte aufnehmende Fördervorrichtung angeordnet ist, daß zwischen den beiden Wickelvorrichtungen zwei Doubliereinheiten so angeordnet und je einer der beiden Wickelvorrichtungen zugeordnet sind, daß die zwischen den Wickelvorrichtungen angeordnete Fördervorrichtung durch beide Doubliereinheiten geführt ist und daß der jeweils von der Zuführvorrichtung kommende Abschnitt der Materialbahn beim Umwickeln der Materialbahnabschnitte von der einen auf die andere Wickelvorrichtung alternierend in der der jeweils aufwickelnden Wickelvorrichtung zugeordneten Doubliereinheit mit den Materialbahnabschnitten zusammenführbar ist.

Die Fördervorrichtung ist reversierbar und ihr sind mindestens zwei Doubliereinheiten zugeordnet. Durch diese Maßnahmen wird eine Doublier- oder Konfektionierungseinrichtung geschaffen, mit der kontinuierlich zugeförderte, einlagige Bahnen zu beliebig dicken, mehrlagigen Materialbahnen konfektioniert werden können.

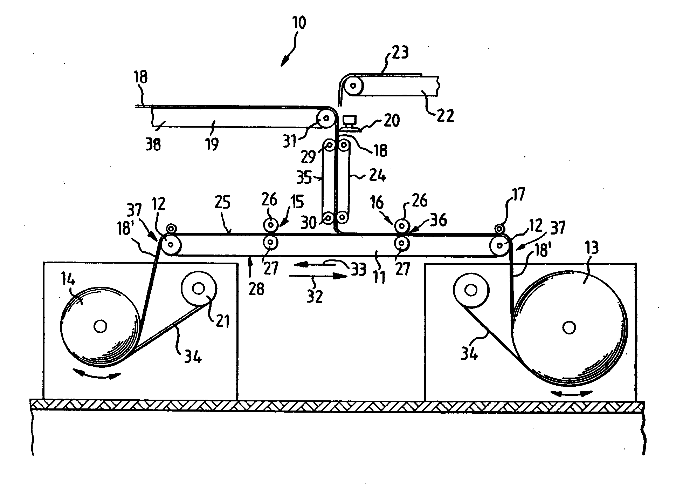

Weitere vorteilhafte Maßnahmen sind in den Unteransprüchen beschrieben. Die Erfindung ist in der beiliegenden Zeichnung dargestellt und wird nachfolgend näher beschrieben.

Die in der einzigen Figur dargestellte Konfektionieranlage 10 besteht im wesentlichen aus einer Fördervorrichtung 11 in Form eines um Umlenkrollen 12 geführten Förderbandes 28 und einer oberhalb dieser Fördervorrichtung 11 angeordneten Zuführvorrichtung 19. Die Fördervorrichtung 11 besteht aus einem planebenen Stahlförderband 28, und ist mit zwei Doubliereinheiten 15 und 16 versehen, die außermittig einander gegenüberliegend angeordnet sind. Das Förderband 28 der Fördervorrichtung 11 läuft mit seinem Obertrum 25 durch deren Walzenspalt 36. Die Doubliereinheiten 15 und 16 bestehen jeweils aus einer Oberwalze 26 und einer Unterwalze 27, die zwischen sich den Walzenspalt 36 bilden. Der Walzenspalt 36 garantiert durch das planebene Stahl-Förderband 28 absolute Maßgenauigkeit bei spannungsfreiem Plattengefüge. Die physikalischen Anforderungen an die doublierten Materialbahnen 18 werden in hohem Maße realisiert und Haftungen auf dem Trägerband und die damit verbundenen Qualitätseinbußen vermieden.

Die Fördervorrichtung 11 ist reversierbar, dh, ihr Förderband 28 kann in seiner Arbeitsrichtung umgekehrt werden. An den beiden freien Enden 37 der Fördervorrichtung 11 sind Wickelvorrichtungen 13 und 14 zur Aufnahme der bearbeiteten Materialbahn 18 vorgesehen.

Die oberhalb der Fördervorrichtung 11 vorgesehene Zuführvorrichtung 19 besteht aus einem Förderband 38, das mit seiner vorderen Umlenkrolle 31 etwa mittig zwischen den Doubliereinheiten 15 und 16 über der Fördervorrichtung 11 endet.

Die mit der Zuführvorrichtung 19 zugeführte Materialbahn 18 wird an eine unterhalb der vorderen Umlenkrolle 31 angeordnete, im wesentlichen senkrecht stehende Leitvorrichtung 24 übergeben. Die Leitvorrichtung 24 besteht aus zwei Förderbändern 35, die um obere Umlenkrollen 29 und untere Umlenkrollen 30 laufen. Diese Leitvorrichtung 24 reicht bis in den Bereich des Obertrums 25 des Förderbandes 28 der Fördervorrichtung 11 und kann die zugeförderte Materialbahn 18 dort vor der jeweils zuerst aktiven Doubliereinheit 15 oder 16 ablegen.

Läuft die Fördervorrichtung 11 in eine erste Arbeitsrichtung 32 (Pfeil), so wird die zugeförderte Materialbahn 18 zuerst durch die erste Doubliereinheit 15 geführt und auf die erste Wickelvorrichtung 13 aufgewickelt. Hat die aufgewickelte Materialbahn 18 die gewünschte Länge erreicht, so kann sie mit einer Schneidvorrichtung 20 abgelängt werden. Damit das nunmehr freie Ende des abgelängten Materialbahnabschnitts 18' nicht von der Fördervorrichtung 11 abrutscht, sind im Bereich der Umlenkrollen 12 des Förderbandes 35 Gegenhalterwalzen 17 angeordnet.

Nachdem das abgetrennte freie Ende der Materialbahn 18 der ersten Doubliereinheit 15 in der ersten Arbeitsrichtung 32 verlassen hat, wird das Förderband 28 in die gegenläufige zweite Arbeitsrichtung 33 umgestellt. Das freie Ende ist nun vorn und der auf der ersten Wickelvorrichtung 13 aufgewickelte Materialbahnabschnitt 18' wird nun abgewickelt.

Etwa in der Mitte zwischen der ersten Doubliereinheit 15 und der zweiten Doubliereinheit 16 wird die mit der Zuführvorrichtung 19 kontinuierlich weiter zugeförderte Materialbahn 18 auf die erste abgelängte Materialbahn 18 geführt, und beide Materialbahnen werden in den Walzenspalt 36 der zweiten Doubliereinheit 16 eingeführt und dort miteinander verbunden. Nach Verlassen der zweiten Doubliereinheit 16 wird der nun doppelte Materialbahnabschnitt 18' auf die zweite Wickelvorrichtung 14 aufgewickelt. Hat der zudoublierte Materialbahnabschnitt 18' die Länge des ersten erreicht, so kann er wiederum mit der Schneidvorrichtung 20 von der kontinuierlich weiterlaufenden Materialbahn 18 abgeschnitten werden. Soll eine dritte Lage aufdoubliert werden, so kann die Fördervorrichtung 11 wieder in die erste Arbeitsrichtung umgestellt werden. Der nun doppelte Materialbahnabschnitt 18' läuft von der zweiten Wickelvorrichtung 14 wieder ab. Wiederum etwa in der Mitte zwischen den Doubliereinheiten 15 und 16 wird die dritte Lage zugeführt und alle drei Lagen werden dann in der ersten Doubliereinheit 15 miteinander verbunden und auf die erste Wickelvorrichtung 13 aufgewickelt. Das Ende der dritten Lage kann wiederum mit der Schneidvorrichtung 20 von der auf der Zuführvorrichtung 19 kontinuierlich weitergeförderten Materialbahn 18 abgelängt oder ohne Abtrennung abgeknickt werden. Dieser Vorgang kann beliebig oft durch die Umkehrung der Arbeitsrichtung der Fördervorrichtung 11 wiederholt werden, bis Materialbahnabschnitte 18' mit der jeweils gewünschten Anzahl von Gewebelagen konfektioniert sind.

Damit die doublierten Materialbahnabschnitte 18' beim Aufwickeln nicht verkleben, sind den Wickelvorrichtungen 13 und 14 jeweils Trommeln 21 zugeordnet, von denen Zwischenläufer 34 abgezogen und zwischen die aufgewickelten Bahnen geführt werden können.

Der Fördervorrichtung 11 kann eine zweite Zuführvorrichtung 22 zugeordnet sein, mit der eine zweite Materialbahn 23 zugefördert werden kann. Diese zweite Materialbahn 23 kann entweder das gleiche Material wie die Materialbahn 18 haben und extern hergestellt sein oder aus einem extern hergestellten anderen Material bestehen, das mit der ersten Materialbahn 18 zu einer Zweikomponentenbahn doubliert werden soll.

## Patentansprüche

1. Verfahren zur Herstellung mehrlagiger Materialbahnen, insbesondere Elastomere enthaltender oder aus Elastomeren bestehender Materialbahnen, bei dem ein Materialbahnabschnitt mehrmals durch eine Doubliereinheit geführt und dabei jedesmal mit einer weiteren Materialbahn vereinigt wird, dadurch gekennzeichnet, daß eine kontinuierlich zugeführte Materialbahn auf eine erste Wickelvorrichtung gewickelt, nach Abwicklung einer vorgegebenen Bahnlänge abgelängt oder abgeknickt und der abgelängte oder abgeknickte Materialbahnabschnitt dann mehrmals von der ersten Wickelvorrichtung auf eine zweite Wickelvorrichtung umgewickelt und wieder zurückgewickelt wird und dabei sowohl heim Hinals auch beim Zurückwickeln mindestens eine zwischen den Wickelvorrichtungen angeordnete Doubliereinheit durchläuft, in der er bei jedem Umwickelvorgang mit einem entsprechenden weiteren Längenabschnitt der kontinuierlich zugeführten Materialbahn zusammengeführt und flächig verbunden wird.

2. Verfahren nach Anspruch 1, dadurch gekennzeichnet, daß der (die) Materialbahnabschnitt(e) beim Hin- und Herwickeln zwei Doubliereinheiten durchläuft (durchlaufen) und daß die weiteren entsprechenden Längenabschnitte der kontinuierlich zugeführten Materialbahn zwischen die beiden Doubliereinheiten geleitet und von dort alternierend in die jeweils in Wickelrichtung liegende Doubliereinheit eingeführt wird.

3. Verfahren nach den Ansprüchen 1 und 2, dadurch gekennzeichnet, daß die Doublierung auf einem Stahl-Förderband in jeweils planebenem Durchlauf durch die Doubliereinheiten erfolgt.

4. Einrichtung zur Durchführung des Verfahrens gemäß Anspruch 1 oder 2 mit zwei Wickelvorrichtungen (13, 14), auf die Abschnitte (18') einer durch eine Zuführvorrichtung (19) zugeführten Materialbahn (18) aufwickelbar und in beiden Richtungen umwickelbar sind, und zwischen denen mindestens eine Doubliereinheit (15, 16) angeordnet ist, in deren Doublierspalt (36) jeweils ein Abschnitt der von der Zuführvorrichtung (19) kommenden Materialbahn (18) mit den auf den Wickelvorrichtungen (13, 14) befindlichen Materialbahnabschnitten (18') während jedes Umwickelvorganges in der jeweiligen Wickelrichtung zusammenführbar ist,
**dadurch gekennzeichnet,**
daß zwischen den Wickelvorrichtungen (13, 14) eine jeweils in Wickelrichtung antreibbare, die Materialbahnabschnitte (18') aufnehmende Fördervorrichtung (11) angeordnet ist,
daß zwischen den beiden Wickelvorrichtungen (13, 14) zwei Doubliereinheiten (15, 16) so angeordnet und je einer der beiden Wickelvorrichtungen zugeordnet sind, daß die zwischen den Wickelvorrichtungen (13, 14) angeordnete Fördervorrichtung (11) durch beide Doubliereinheiten geführt ist und
daß der jeweils von der Zuführvorrichtung (19) kommende Abschnitt der Materialbahn (18) beim Umwickeln der Materialbahnabschnitte (18') von der einen auf die andere Wickelvorrichtung alternierend in der der jeweils aufwickelnden Wickelvorrichtung (13 bzw. 14) zugeordneten Doubliereinheit (15 bzw. 16) mit den Materialbahnabschnitten (18') zusammenführbar ist.

5. Einrichtung nach Anspruch 4, dadurch gekennzeichnet, daß die Fördervorrichtung (11) ein Förderband (28) aufweist, das mit seinem Obertrum (25) durch die Doubliereinheiten (15, 16) läuft.

6. Einrichtung nach Anspruch 5, dadurch gekennzeichnet, daß das Förderband (28) ein endloses stahlband ist.

7. Einrichtung nach Anspruch 4, dadurch gekennzeichnet, daß der Zuführvorrichtung (19) eine Schneidvorrichtung (20) zum Ablängen der Materialbahnabschnitte (18') zugeordnet ist.

8. Einrichtung nach einem der Ansprüche 4 bis 7, dadurch gekennzeichnet, daß zur Zuführung der Materialbahn (18) zwischen der Zuführvorrichtung (19) und der Fördervorrichtung (11) eine Leitvorrichtung (24) in Form von zwei umlaufenden, die Materialbahn (18) zwischen sich aufnehmenden Förderbändern (35) vorgesehen ist.

## Claims

1. Method of producing multi-layered material webs, more especially material webs containing elastomers or being formed from elastomers, wherein one material web portion is guided several times through a doubling unit and is thereby combined each time with an additional material web, characterised in that a continuously fed material web is wound onto a first winding device and cut to length or broken off after a prescribed web length has been unwound, and the material web portion which has been cut to length or broken off is then wound onto a second winding device several times by the first winding device and wound back again and, in such case, during both the winding and the winding-back processes, traverses at least one doubling unit, which is disposed between the winding devices and in which said portion is combined during each winding process with an additional corresponding longitudinal portion of the continuously fed material web and bonded thereto in a surface-to-surface manner.

2. Method according to claim 1, characterised in that the material web portion(s) traverses (traverse) two doubling units during the reciprocating winding process, and in that the additional corresponding longitudinal portions of the continuously fed material web are conducted between the two doubling units and are introduced alternately from there into the respective doubling unit lying in the winding direction.

3. Method according to claims 1 and 2, characterised in that the doubling on a steel conveyor belt is effected in a planar passage through the doubling units.

4. Apparatus for accomplishing the method according to claim 1 or 2, having two winding devices (13, 14), over which portions (18') of a material web (18), which is fed by a feed device (19), can be wound and are windable in both directions, and at least one doubling unit (15, 16) is disposed between said winding devices, a respective portion of the material web (18), which comes from the feed device (19), being combinable in the doubling gap (36) of said doubling unit with the material web portions (18'), which are situated on the winding devices (13, 14), during each winding process in the respective winding direction, characterised in that a conveyor means (11), which is drivable in each winding direction and receives the material web portions (18'), is disposed between the winding devices (13, 14), in that two doubling units (15, 16) are so disposed between the two winding devices (13, 14) and associated with each of the two winding devices that the conveyor means (11), which is disposed between the winding devices (13, 14), is guided through both doubling units, and in that the respective portion of the material web (18) coming from the feed device (19) is combinable with the material web portions (18') during the winding of the material web portions (18') from one to the other winding device alternately in the doubling unit (15 or 16 respectively) associated with the respective winding-on winding device (13 or 14 respectively).

5. Apparatus according to claim 4, characterised in that the conveyor means (11) has a conveyor belt (28), which travels through the doubling units (15, 16) with its upper section (25).

6. Apparatus according to claim 5, characterised in that the conveyor belt (28) is an endless steel belt.

7. Apparatus according to claim 4, characterised in that a cutting device (20) is associated with the feed device (19) for cutting the material web portions (18') to length.

8. Apparatus according to one of claims 4 to 7, characterised in that a conducting means (24), in the form of two circulatory conveyor belts (35) which receive the material web (18) therebetween, is provided between the feed device (19) and the conveyor means (11) to feed the material web (18).

## Revendications

1. Procédé de fabrication de bandes multicouches, en particulier contenant des élastomères ou composées d'élastomères, dans lequel un tronçon de bande est guidé à plusieurs reprises dans une unité de doublage et uni à chaque passage à une bande supplémentaire, caractérisé en ce qu'une bande, amenée en continu, est enroulée sur un premier dispositif d'enroulement, puis, après déroulement d'une longueur de bande prédéterminée, est découpée à longueur ou reçoit un pli de bobinage, et le tronçon de bande découpé à longueur ou doté d'un pli de bobinage est ensuite surenroulé plusieurs fois, depuis le premier dispositif d'enroulement, sur un deuxième dispositif d'enroulement et inversement, et tant lors de l'enroulement dans un sens que lors de l'enroulement dans l'autre sens, passe dans au moins une unité de doublage disposée entre les dispositifs d'enroulement et dans laquelle, à chaque processus de surenroulement, il est assemblé et relié sur sa surface à un autre tronçon de longueur de la bande amenée en continu.

2. Procédé selon la revendication 1, caractérisé en ce que le (les) tronçon(s) de bande passe(nt), lors de chaque enroulement dans un sens puis dans l'autre sens, dans deux unités de doublage, et en ce que les autres tronçons correspondants de bande amenée de façon continue sont dirigés entre les deux unités de doublage et, de là, alternativement, dans l'unité de doublage se trouvant dans la direction d'enroulement.

3. Procédé selon les revendications 1 ou 2, caractérisé en ce que le doublage s'effectue sur une bande transporteuse en acier, passant à plat dans chacune des unités de doublage.

4. Dispositif de mise en oeuvre du procédé selon la revendication 1 ou 2, avec deux dispositifs d'enroulement (13, 14), sur lesquels des tronçons (18') d'une bande (18) amenée au moyen d'un dispositif d'amenée (19), peut être enroulé et surenroulé, dans un sens et dans l'autre, dans les deux directions, et entre lesquelles est disposée au moins une unité de doublage (15, 16) dans l'interstice de doublage (36) de laquelle un tronçon de la bande (18) venant du dispositif d'amenée (19) peut être assemblé aux tronçons de bande (18'), se trouvant sur les dispositif d'enroulement (13, 14), pendant chaque processus d'enroulement, dans le sens d'enroulement respectif, caractérisé en ce qu'entre les dispositifs d'enroulement (13, 14) est disposé un dispositif transfert (11), recevant les tronçons de bande (18') pouvant chacun être entraînés dans la direction d'enroulement,
en ce que, entre les deux dispositifs d'enroulement (13, 14), deux unités de doublage (15, 16) sont disposées et associés à chacun des deux dispositifs d'enroulement, de manière que le dispositif de transfert (11) se trouvant entre les dispositifs d'enroulement (13, 14) soit guidé à travers les deux unités de doublage et que le tronçon de bande (18) venant respectivement du dispositif d'amenée (19) puisse être assemblé aux tronçons de bande (18') par l'un ou l'autre dispositif d'enroulement, alternativement, dans l'unité de doublage (15, respectivement 16) associée au dispositif d'enroulement (13 respectivement 14) alors en phase d'enroulement.

5. Dispositif selon la revendication 4, caractérisé en ce que le dispositif de transfert (11) comporte une bande de transfert (28), dont le brin supérieur (25) défile dans les unités de doublage (15, 16).

6. Dispositif selon la revendication 4, caractérisé en ce que la bande de transfert (28) est une bande en acier continue.

7. Dispositif selon la revendication 5, caractérisé en ce qu'un dispositif de découpage (20) destiné à la mise à longueur des tronçons de bande (18') est associé au dispositif d'amenée (19).

8. Dispositif selon l'une des revendications 4 à 7, caractérisé en ce qu'un dispositif de guidage (24) , se présentant sous la forme de deux bandes de transfert (35) et circulant en recevant entre elles la bande (18), est prévue pour assurer l'amenée de la bande (18) entre le dispositif d'amenée (19) et le dispositif de transfert (11).
